# EUROPÄISCHE PATENTSCHRIFT

(11) **EP 0 670 917 B1**
(45) Veröffentlichungstag und Bekanntmachung des Hinweises auf die Patenterteilung: **19.02.1997**
(21) Anmeldenummer: 94921529.7
(22) Anmeldetag: 28.07.1994
(51) Int. Cl.: D01F 2/00, C08L 1/02

(54) **FORM- BZW. SPINNMASSE ENTHALTEND CELLULOSE**
MOULDING OR SPINNING MATERIAL CONTAINING CELLULOSE
MATIERE DE MOULAGE OU DE FILAGE CONTENANT DE LA CELLULOSE

(30) Priorität: 14.09.1993 AT 1857/93
(43) Veröffentlichungstag der Anmeldung: 13.09.1995
(73) Patentinhaber: LENZING AKTIENGESELLSCHAFT, 4860 Lenzing (AT)
(72) Erfinder: KALT, Wolfram, A-4860 Lenzing (AT); MÄNNER, Johann, A-4852 Weyregg 145 (AT); FIRGO, Heinrich, A-4840 Vöcklabruck (AT)
(74) Vertreter: Schwarz, Albin, Dr. Kopecky & Schwarz Patentanwälte
(86) Internationale Anmeldenummer: AT9400101
(87) Internationale Veröffentlichungsnummer: WO9508010

(56) Entgegenhaltungen:
- EP-A- 0 047 929
- DD-A- 158 656
- DD-A- 218 104
- CRC Handbook of Chemistry and Physics, 61. Ausg. (1980); S. D-163
- Römpp Chemie Lexikon, 9. Aufl.; Band 3 (1990); S. 1904
- Ullmanns Encyklopädie der technischen Chemie, 4. Aufl.; Band 9 (1975); S. 187-191

## Beschreibung

Die Erfindung betrifft eine Form- bzw. Spinnmasse, die Cellulose, ein wässeriges tertiäres Aminoxid, ein Nichtlösungsmittel für Cellulose, insbesondere Wasser, und einen Stabilisator enthält. Die Erfindung betrifft weiters ein Verfahren zur Herstellung einer cellulosischen Spinnmasse und ein Verfahren zur Herstellung cellulosischer Formkörper, insbesondere Fasern und Folien.

Tertiäre Aminoxide sind als alternative Lösungsmittel für Cellulose bekannt. Aus der US-PS 2,179,181 ist beispielsweise bekannt, daß tertiäre Aminoxide Cellulose ohne Derivatisierung zu lösen vermögen und daß aus diesen Lösungen durch Fällung cellulosische Formkörper, wie Fasern, gewonnen werden können. In den US-PSen 3,447,939, 3,447,956 und 3,508,941 werden als weitere Lösungsmittel cyclische Aminoxide empfohlen. Darüberhinaus werden beispielhaft genannt: Dimethylethanolaminoxid, Triäthylaminoxid, N-Methylpiperidin-N-oxid, N-Methylpyrrolidin-N-oxid. Aus der EP-A - 0 553 070 der Anmelderin sind weitere tertiäre Aminoxide bekannt. Alle tertiären Aminoxide, die Cellulose zu lösen vermögen, sind gemeint, wenn nachfolgend der Einfachheit halber lediglich NMMO (= N-Methylmorpholin-N-oxid) angesprochen wird, sofern anderen Textstellen nichts Gegenteiliges zu entnehmen ist. Weiters wird im folgenden mit "NMMO-Cellulose-Lösung" die Cellulose enthaltende Form- bzw. Spinnmasse bezeichnet.

Tertiäre Aminoxide bieten als alternative Lösungsmittel insofern einen Vorteil, als die Cellulose im Gegensatz zum Viskoseverfahren vom NMMO nicht-derivatisierend gelöst wird, wodurch die Cellulose nicht chemisch regeneriert werden muß, das NMMO chemisch unverändert bleibt und beim Fällen in das Fällbad übergeht, aus diesem rückgewonnen und für eine erneute Lösungsbereitung wiederverwendet werden kann. Das NMMO-Verfahren eröffnet somit die Möglichkeit eines geschlossenen Lösungsmittelkreislaufes. Dazu kommt noch, daß NMMO eine äußerst geringe Toxizität aufweist.

Ein Verfahren zur Herstellung von Lösungen von Cellulose in tertiären Aminoxiden ist z.B. aus der FR-A - 2 450 293 bekannt. Gemäß Beispiel 2 dieser Literatur wird Cellulose mit N-Methylmorpholin-N-oxid (NMMO), welches als Hydrat in fester Form vorliegt und 9,5% Wasser enthält, vermengt und diese feste Mischung in einem Extruder aufgeschmolzen. Dabei geht Cellulose in Lösung, da der Wassergehalt unter 17% liegt.

Verfahren, welche feste Aminoxide (Hydrate) als Ausgangsstoff verwenden, können zwar in Extrudern durchgeführt werden, wobei die Auflösung der Cellulose durch einfaches Aufschmelzen des Aminoxid-Hydrates in Gang gesetzt wird. Diese Verfahren sind jedoch aufwendig und teuer, da sie von handelsüblichen, wässerigen Aminoxid-Lösungen oder von gebrauchten, gereinigten Spinnbädern ausgehen und vor der Lösungsbereitung zur Aufkonzentrierung entsprechend große Mengen Wasser entfernt werden müssen, was in einem Extruder nicht möglich ist, da keine hohen Verdampfungsleistungen erzielt werden können. Diese Verfahren wurden zunächst in Rührkesseln bzw. Mischern durchgeführt.

In einem Rührkessel kann jedoch aufgrund des ungünstigen Verhältnisses von Flüssigkeitsoberfläche zu Flüssigkeitvolumen nur schlecht Wasser abgezogen werden, was zu stundenlangen Verweilzeiten im Rührkessel führt. Während dieser Zeit kommt es zu einem teilweisen Abbau des tertiären Aminoxids und der polymeren Cellulosekette, der durch erhöhte Temperatur noch begünstigt wird. Dieser teilweise Abbau wirkt sich wiederum auf die Spinnsicherheit und auf gewisse Eigenschaften der Endprodukte aus, wie z.B. auf ihre Festigkeit, ihre Dehnung und ihre Schlingenfestigkeit. Weiters ist bekannt, daß es zu einer starken Verfärbung infolge eines Abbaus des verwendeten Aminoxides kommen kann.

### Abbau der Cellulose in NMMO

Beim Auflösen von Cellulose in NMMO nimmt der Polymersationsgrad der Cellulose ab und ihre Molekularmassenverteilung verengt sich (Golova et al., Khim. Volokna, Nr. 3, Seite 30 (1987)). In der Schmelz lösung von Cellulose in NMMO erfolgt die anfängliche Kettenspaltung um ein Vielfaches rascher, als über einen rein thermischen oder thermohydrolytischen Abbau der Cellulose zu erklären wäre. Weiters wurde beobachtet, daß die Spaltungszunahme vom Reinheitsgrad des NMMO abhängt (B. Lukanoff et al., Acta Polym., 35, Nr. 5, Seite 339 (1984)).

Es ist in der Literatur auch beschrieben, daß der Abbau der Cellulose in NMMO bei 120°C nicht hydrolytisch, sondern "direkt oxidativ" an den Endgruppen der polymeren Cellulosekette verläuft. Zusätzlich führt insbesondere die Anwesenheit von Metallionen (z.B. Fe³⁺) zu radikalisch initiierten Kettenspaltungen und damit zu einem deutlichen Abbau der Cellulose und des Lösungsmittels (Buijtenhuijs et al. (The Degradation and Stabilization of Cellulose Dissolved in N-Methylmorpholin-N-Oxide (NMM), in "Das Papier", 40. Jahrgang, Heft 12, Seiten 615-619, 1986).

Bei der thermischen Belastung von Lintersproben in NMMO konnte ein Anstieg des Carboxylgruppengehaltes der verwendeten Proben auf etwa des Doppelte festgestellt werden (Lukanoff et al., siehe oben).

In der Fachwelt wird seit Jahren versucht, mittels verschiedener Stabilisatoren den Abbau der Cellulose, der ganz allgemein in Lösung (nicht nur in NMMO) zu beobachten ist, zu verhindern. Dies ist z.B. folgenden Publikationen zu entnehmen:

Aus der DE-A 2 000 082 ist bekannt, im Falle der Alkalicellulose während der Alkalisierung der Cellulose ein Antioxidans zuzugeben, um den einsetzenden oxidativen Abbau zu verhindern. Als Antioxidantien werden z.B. Brenzcatechin, Pyrogallol und Gallussäure genannt. Antioxidantien sollen die Abnahme der relativen Viskosität während des Temperierens von NMMO-Cellulose-Lösungen verlangsamen, wobei sich Hydrochinon am wirksamsten erweisen soll (Golova et al., Khim. Volokna, Nr. 3, Seite 30 (1987)). An anderer Stelle ist vorgeschlagen worden, den Polymerabbau durch Zusatz von Citronensäure und/oder Glucose zu vermindern (DE-A - 3 021 943). Laut EP-A - 0 047 929 zeigen alle diese Zusätze aber keine zufriedenstellende Wirkung, und organische Verbindungen, wie Glycerinaldehyd und Verbindungen, die wenigstens vier Kohlenstoffatome mit zwei konjugierten Doppelbindungen und wenigstens zwei Hydroxyl- und/oder Aminogruppen mit wenigstens einem Wasserstoffatom besitzen, sollen eine bessere Wirkung zeigen. Auch diese Stoffe wirken antioxidativ. Als wirksamster Zusatzstoff wird in der EP-A - 0 047 929 der Gallussäurepropylester (GPE) genannt. In einer Reihe späterer Literaturstellen bzw. Patentliteraturen wird GPE ebenfalls als Stabilisator genannt (z.B. Buijtenhuijs et al., (1986) s.o.; Loubinoux D et al., Lenzinger Berichte, Nr. 59, Seite 105 (1985) und Text. Res. J., 57, Nr. 2, Seite 61 (1987); CA-A - 1,251,880; US-A - 4,880,469).

GPE weist jedoch entscheidende Nachteile auf. So verhindert GPE kaum Reaktionen an oxydierbaren Endgruppen, auch wenn GPE den Celluloseabbau insgesamt gesehen zwar hintanhält (Buijtenhuijs et al., 1986, s.o.). Weiters führt GPE gemäß DD-A - 0 218 104 zu einer Verfärbung der NMMO-Cellulose-Lösung, und es reichern sich bei der Kreislaufführung Reaktionsprodukte des GPE an. Ähnliches ist auch aus der AT-B 393.841 der Anmelderin bekannt. Ferner kann Gallussäure, die chemische Stammverbindung des genannten Esters, ähnlich wie Ascorbinsäure nicht nur als Antioxidans sondern auch als Autoxidans wirken, was auch nachteilig ist. Ein schwerwiegender Nachteil des GPE besteht allerdings darin, daß er die thermische Instabilität der NMMO-Cellulose-Lösung (siehe unten) nicht beseitigen kann. Dies haben erstmals Buijtenhuijs et al. (1986, s.o.) festgestellt. Darüberhinaus haben Untersuchungen der Erfinder der vorliegenden Erfindung ergeben, daß GPE die thermische Instabilität der NMMO-Celluloselösung unter gewissen Voraussetzungen bei Anwesenheit von Metallen sogar noch erhöht (siehe weiter unten).

Aus der DD 1586 56 ist bekannt, daß Substanzen, die Aminoxiden gegenüber reduzierend wirken, dem Celluloseabbau ebenfalls entgegenwirken. Als solche Substanzen werden genannt: stickstoffhaltige Substanzen, wie Amine, Harnstoff, Hydroxylamin und Hydrazin, schwefelhaltige, reduzierend wirkende Substanzen, wie Sulfite, Thiosulfate, Dithionite, Thioharnstoff oder Schwefel, und reduzierend wirkende, C, H und O enthaltende Verbindungen, wie Aldehyde und reduzierende Zucker.

Aus der DD-A - 0 229 708 ist bekannt, daß Phenole, insbesondere das 2,6-di.tert.Butyl-p-kresol, und ein Gemisch dieser Verbindungen mit Alkalihexametaphosphat, dem thermooxidativen Abbau der Cellulose entgegenwirken.

Durch Verwendung von rein antioxidativ wirkenden Verbindungen konnte die Bildung gefärbter Komponenten im System NMMO-Cellulose reduziert werden (Guthrie et al., "Cellulose sources and exploitation", ed. J. F. Kennedy, G.O. Phillips, P.A. Williams, (Ellis Horwood Ltd., Chichester UK), Kap. 6, Seite 49 (1990)).

Auch in Gegenwart von Aminen soll der Abbau der Cellulose gebremst sein (Golova et al., Vysokomol. Soedin., Ser A 28, Nr. 11, Seite 2308 (1986)).

### Abbau des NMMO

Aminoxide weisen allgemein nur eine begrenzte Thermostabilität auf, die in Abhängigkeit von der Struktur variiert. Das Monohydrat von NMMO liegt unter Normalbedingungen als weißer kristalliner Feststoff vor, der bei 72°C schmilzt. Die Anhydroverbindung schmilzt hingegen erst bei 172°C. Beim Erhitzen des Monohydrates tritt ab 120/130°C eine starke Verfärbung auf. Ab 175°C wird eine exotherme Reaktion unter vollständiger Entwässerung der Schmelze und heftiger Gasentwicklung mit explosionshaftem Verlauf ausgelöst, wobei Temperaturen über 250°C erreicht werden (siehe oben Taeger et al., (1985); Lang et al., Cell. Chem. Technol. 20, Nr. 3, Seite 289 (1986)).

NMMO baut thermisch vor allem zu N-Methylmorpholin, Morpholin, Formaldehyd, N-Formylmorpholin und CO₂ ab. Dieser Abbau ist vermutlich zum Teil radikalischer Natur und wird von Metallionen noch beschleunigt (Taeger et al., Formeln, Faserstoffe, Fertigware, 4, Seiten 14-22 (1985) und Taeger et al., Das Papier, Nr. 12, Seite 784 (1991)).

Metallisches Eisen und Kupfer, sowie insbesondere deren Salze, setzen die Zersetzungstemperaturen von NMMO beträchtlich herab, wobei gleichzeitig die jeweilige Zersetzungsgeschwindigkeit erhöht wird (Ferris et al., J.Org.Chem., 33, Seite 3493 (1968); Taeger et al., (1985) s.o.; Lang et al., (1986) s.o.; Buijtenhuijs et al., (1986) s.o.).

Auch Cellulose begünstigt die Zersetzung einer Schmelze von NMMO-Monohydrat in starkem Ausmaß, wobei sich gezeigt hat, daß Cellulose nur die Geschwindigkeit der NMMO-Abbauprozesse beschleunigt, nicht aber deren Charakter beeinflußt (siehe oben Taeger et al. (1985); Lang et al. (1986); Buijtenhuis et al. (1986) und Golova et al. (1987)).

Gemäß der EP-A - 0 111 518 sollen Phosphorsäure und Phosphonsäure bzw. deren Salze und Komplexe mit Metallionen das Lösungsmittel, also NMMO, und Cellulose durch eine Verlangsamung der Geschwindigkeit der Abbauprozesse stabilisieren. Auch an anderer Stelle ist ein stabilisierender Einfluß von Verbindungen auf Phosphorbasis, insbesondere Natriumhexametaphosphat und Hydroxyethyldiphosphonsäure, beschrieben (siehe oben Guthrie et al. (1990). Gemäß DD-A - 0 229 708 wird jedoch der Abbau des NMMO in NMMO-Cellulose-Lösungen bei den Verarbeitungstemperaturen nicht oder nur unzureichend inhibiert.

Zur Verhinderung des Abbaues des NMMO und der Cellulose ist es aus der DD-A - 0 218 104 bekannt, dem Aminoxid eine oder mehrere basische Substanzen in Mengen zwischen 0,1 und 10 Mol%, bezogen auf die Celluloselösung, zuzusetzen. Als basische Substanz werden Alkalihydroxide, z.B. NaOH, basisch reagierende Salze, z.B. Na₂CO₃, sowie organische Stickstoffbasen empfohlen. Es hat sich allerdings gezeigt, daß Zusätze alkalischer Substanzen die thermische Zersetzung des NMMO zwar bremsen aber nicht vollständig inhibieren vermögen (Lang et al., Cell. Chem. Technol. 20, Nr. 3, S 289 (1986). Darüberhinaus haben Versuche der Erfinder der vorliegenden Erfindung ergeben, daß der Zusatz basischer Substanzen den Abbau der Cellulose bei längerer thermischer Belastung nicht verhindern kann. Somit ist auch die Basenstabilisierung als solche nicht geeignet, beide Anforderungen des NMMO-Verfahrens gleichzeitig zu erfüllen, nämlich sowohl den Abbau des NMMO als auch den Abbau der Cellulose zuverlässig zu verhindern.

Die Vielfalt der Zersetzungsprozesse macht eine Stabilisierung der NMMO-Cellulose-Lösungen schwierig. Trotz der zahlreichen Optimierungsversuche, gelang es mit den oben genannten Stabilisatoren bis heute nicht, den NMMO- und den Celluloseabbau auf zufriedenstellende Weise zu verhindern. Die zahlreichen Lösungsansätze, die in der Literatur gegeben werden, spiegeln diese Tatsache wider.

Im übrigen tritt zu den oben genannten Problemen noch ein weiteres: die thermische Instabilität der NMMO-Cellulose-Lösungen selbst. Darunter ist zu verstehen, daß in den Lösungen bei den erhöhten Temperatur der Verarbeitung (etwa 110-120°C) unkontrollierbare Zersetzungsprozesse ausgelöst werden, die unter Entwicklung von Gasen zu heftigen Verpuffungen, Bränden und sogar zu Explosionen führen können.

Über die thermisch instabile Natur der Lösung, also des Extrusionsgemisches, ist in der Literatur nur wenig bekannt. Auf das Phänomen ist von Buijtenhuijs et al. 1986 erstmals deutlich hingewiesen worden. Insbesondere bei Anwesenheit von Metallionen können in bestimmten Fällen die Zersetzungsreaktionen in der Spinnmasse durchgehen. Metallionen sind aber in der Lösung aufgrund des metallischen Aufbaues der Anlagenteile nie auszuschließen.

Das Durchgehen kann selbst durch Zugabe von GPE nicht verhindert werden (Buijtenhuijs et al., 1986). Im Gegenteil: wie Untersuchungen der Erfinder der vorliegenden Erfindung ergeben haben, erhöhen GPE und auch andere aromatische Hydroxyverbindungen mit guten Komplexierungseigenschaften die thermische Instabilität der NMMO-Celluloselösung bei Anwesenheit von Metallen sogar noch; d.h., daß GPE das gefährliche Durchgehen bzw. die Explosionen (mit)initiiert (siehe weiter unten).

Bis heute konnten noch keine Stabilisierungsmaßnahme gefunden werden, die sowohl Cellulose und NMMO ausreichend stabilisiert als auch gleichzeitig die thermische Instabilität der Cellulose-NMMO-Lösung so deutlich herabsetzt und somit den explosionshaften Zerfall unter Prozeßbedingungen verhindert. Es liegt auf der Hand, daß gerade die thermische Instabilität erhitzter Spinnmassen problematisch ist, da diese Spinnmassen in Anlagenteilen mit größerem Volumen, wie Rührkessel, Mischer oder dgl., ein Sicherheitsrisiko darstellen.

Um die Explosionsgefahr im Stadium der Lösungsherstellung zu bannen und die thermische Belastung der Lösung gering zu halten, ist aus der EP-A - 0 356 419 bekannt, die Lösung statt in einem Rührkessel oder dergleichen in einem Filmtruder zu bereiten. Im Laufe dieses Verfahrens wird die Suspension der Cellulose im NMMO, das einen Wassergehalt von bis zu 40% aufweisen kann, über die Heizfläche des Filmtruders schichtartig ausgebreitet und transportiert und dabei erhöhter Temperatur und vermindertem Druck ausgesetzt, um Wasser abzuziehen, bis die Cellulose in Lösung geht. Dies ermöglicht auf kostengünstige Weise eine rasche Erwärmung der Suspension auf die zur Lösungsherstellung erforderlichen Temperaturen und zugleich eine rasche Lösungsbereitung, sodaß eine Zersetzung des tertiären Aminoxides und ein Abbau der Cellulose weitgehend verhindert werden können. Außerdem ist das Sicherheitsrisiko verglichen mit der Lösungsbereitung im Rührkessel wesentlich geringer, da nicht eine große Lösungsmittelmenge auf einmal erhitzt wird, sondern immer nur eine vergleichsweise geringe Menge.

Das in der EP-A - 0 356 419 beschriebene Verfahren senkt somit durch technische Maßnahmen das Sicherheitsrisiko bei der Herstellung der Celluloselösung. Damit besteht aber immer noch die Möglichkeit von Exothermien, Verpuffungen, etc. bei der Verarbeitung der fertigen Lösungen, also in denjenigen Anlagenteilen, die zwischen Filmtruder und Spinnmaschine geschaltet sind. Die thermische Instabilität der erwärmten NMMO-Celluloselösung mit der damit verbundenen Gefahr ist bis heute ein Problem. An diesem Punkt setzt nun die vorliegende Erfindung an, die sich zur Aufgabe stellt, den gesamten Prozeß der Celluloseverarbeitung, also die Prozeßschritte von der Herstellung der Celluloselösung bis zur eigentlichen Herstellung der Formkörper, so zu gestalten, daß gefährliche Exothermien nicht auftreten können, wobei aber gleichzeitig der Abbau der Cellulose und des NMMO möglichst gering gehalten werden sollen. Es ist somit das Ziel der vorliegenden Erfindung, das NMMO-Verfahren so weiterzuentwickeln, daß es gefahrlos durchgeführt werden kann.

Das genannte Ziel kann erfindungsgemäß mit einer Form- bzw. Spinnmasse erreicht werden, die Cellulose, ein wässeriges tertiäres Aminoxid, ein Nichtlösungsmittel und ein oder mehrere Stabilisatoren enthält, die insgesamt antioxidativ auf die Cellulose und ausreichend basisch wirken sodaß die thermische Stabilität der Form- bzw. Spinnmasse erhöht wird, mit der Maßgabe, daß als basisch wirkender Stabilisator kein Phosphat vorgesehen ist. Als Stabilisatoren sind bevorzugt ein Antioxidans und OH⁻-Ionen vorgesehen.

Der Begriff "Antioxidans" wird so verstanden, daß damit alle Stoffe und Stoffgemische umfaßt werden, die einem oxidativen und radikalischen Abbau der Cellulose entgegenwirken. Auch Radikalfänger und Reduktionsmittel fallen naturgemäß unter diesen Begriff. Derartige Stoffe sind z.B. die aus der DE-A - 2 000 082 bekannten mehrwertigen Phenole, mehrwertigen Oxycarbonsäuren, Trioxybenzole etc. Bevorzugte Antioxidantien sind Tannine und jene Stoffe, die in der EP-B - 0 047 929 genannt sind, d.h. Glycerinaldehyd und/oder ein oder mehrere organische Verbindungen, die wenigstens vier Kohlenstoffatome und wenigstens zwei konjugierte Doppelbindungen und wenigstens zwei Hydroxyl- und/oder Aminogruppen mit wenigstens einem Wasserstoffatom besitzen. Insbesondere bevorzugt sind Brenzkatechin, Pyrogallol, Gallussäure, Gallussäuremethylester, -ethylester, -propylester und -isopropylester. Auch Hydrochinon und Anthrachinon bzw. strukturanaloge Verbindungen sowie Derivate können als Antioxidans eingesetzt werden.

Die Erfindung beruht auf der Erkenntnis, daß der Celluloseabbau und ein in der erwärmten NMMO-Cellulose-Lösung auftretendes, explosionsartiges Durchgehen von Zersetzungsreaktionen auf einfache Weise dann wirksam verhindert werden können, wenn auf die Lösung sowohl antioxidativ als auch ausreichend alkalisch eingewirkt wird. Dies kann auf mehrere Arten erfolgen. So kann z.B. ein Gemisch aus zwei Stoffen (Antioxidans und Base) in der Lösung vorhanden sein. Es kann aber auch ein einziger Stoff zugegeben werden, sofern dieser beide Funktionen im Molekül vereinigt, der Stoff also sowohl antioxidativ als auch ausreichend basisch wirkt. Ein derartiger Stoff ist z.B. Tris-(2,4,6-dimethylamino)-phenol.

Ob im Sinne der vorliegenden Erfindung eine ausreichende Mindestbasizität in der Celluloselösung vorhanden ist, kann mittels eines unten beschriebenen Mikroversuchs festgestellt werden. Es hat sich gezeigt, daß dieses Kriterium auf jeden Fall dann erfüllt ist, wenn die Carbonsäuren, die von Abbauprozessen herrühren und im wässerigen NMMO, das zur Bereitung der Celluloselösung eingesetzt wird, enthaltenen sind, neutralisiert vorliegen. Die dazu notwendige Basenmenge, die in die Lösung eingebracht werden muß, kann auf einfache Weise titrimetrisch im wässerigen NMMO bestimmt werden und stellt eine bevorzugte Basenmenge dar. Zweckmäßigerweise wird darüberhinaus noch ein Basenüberschuß zugegeben, um in der Celluloselösung eine Basenreserve zum Abpuffern von weiteren, im Prozeßverlauf entstehenden Säuren zu schaffen (siehe weiter unten).

Das erfindungsgemäße antioxidative und basische Einwirken auf die Celluloselösung gewährleistet aber nicht nur, daß ein explosionsartiges Durchgehen von Zersetzungsreaktionen in der Lösung mit Sicherheit verhindert wird, sondern auch, daß dem Abbau der Cellulose und dem Abbau des NMMO entgegenwirkt wird. Es hat sich sogar gezeigt, daß das gleichzeitige antioxidative und basische Einwirken auf die Lösung einen synergistischen Effekt hinsichtlich der Zurückdrängung des Celluloseabbaues aufweist.

Die Erfinder haben aufgrund zahlreicher Versuche festgestellt, daß bei der thermischen Belastung des NMMO in einem geschlossenen System in Gegenwart von Metallsalzen und/oder Metallen und/oder Metallteilen eine drastische Verschiebung des pH in Richtung kleinerer Werte auftritt. Auch im Zuge von Abbaureationen in NMMO-Celluloselösungen werden Säuren gebildet, die den pH senken. Diese Säuren führen zu einer Verringerung der Stabilität der N-O Bindung des NMMO und damit zu einer weiteren Zersetzung. Darüberhinaus konnte nachgewiesen werden, daß die Säuren zu einer Sensibilisierung der Lösung gegenüber Metallionen und metallischen Teilchen führt, was die Zersetzungstemperatur des NMMO dramatisch senken und damit offenbar ein Durchgehen der Zersetzungsreaktionen auslösen kann.

Diesem ungünstigen Verlauf kann durch Stabilisierung des NMMO mittels Basenzugabe zwar entgegengesteuert werden, eine ausschließliche Basenstabilisierung ist jedoch stark konzentrationsabhängig und damit in der Praxis sehr heikel. Es konnte festgestellt werden, daß einerseits niedrige Basenkonzentrationen praktisch kaum eine wirksame Stabilisierung gegen Abbauprozesse bieten, daß aber andererseits hohe Basenkonzentrationen wiederum bedenklich sind, da insbesondere bei längerer thermischer Belastung ein zwar zeitlich verzögerter, aber dann umso rascher anlaufender Zerfall und ein Abbau der Cellulose ausgelöst werden. Diese Zerfallsprozesse sind säurebildend, verbrauchen Base und verschieben den pH somit auch in Richtung kleinerer Werte. Mit zunehmendem Säuregehalt ist aber auch die Stabilität des NMMO immer weniger gegeben. Es wird angenommen, daß ein derartiges Aufschaukeln der einzelnen Zersetzungsprozesse letztlich dazu führt, daß eine Art Kettenreaktion ausgelöst wird.

Es hat sich nun gezeigt, daß die Verschiebung des pH gegen den sauren Bereich gebremst werden kann, wenn die Cellulose zusätzlich mit einem Antioxidationsmittel gegen Abbau stabilisiert wird. Besonders geeignete Antioxidationsmittel sind Tannine, Phenole, aromatische Polyhydroxyverbindungen und insbesondere der Gallussäurepropylester. Die stabilisierende Funktion der Antioxidationsmittel wird durch die gleichzeitige Anwesenheit basisch wirkender Stoffe nicht nur nicht gestört, sondern sogar noch gesteigert, da der unangenehme Nebeneffekt des GPE, die thermische Instabilität der NMMO-Cellulose-Lösung in Gegenwart von Metallionen zu erhöhen, beseitigt wird.

Die Tatsache, daß die Base die Funktion des Antioxidans nicht stört, ist gerade beim bevorzugt verwendeten GPE verwunderlich, da der Fachmann annehmen würde, daß GPE als Ester bei den hohen Temperaturen der Lösungsherstellung (> 110°C) in der basischen Umgebung des NMMO (pH der wässerigen NMMO-Lösung, die zur Bereitung der erfindungsgemäßen Celluloselösung verwendet wird, ist bevorzugt > 11) sofort hydrolytisch zerstört würde.

Ein weiterer positiver Effekt der gleichzeitigen antioxidativen und basischen Einwirkung auf die Lösung besteht darin, daß der Celluloseabbau im Vergleich zur ausschließlich antioxidativen Einwirkung noch weiter inhibiert wird.

Somit ist es durch die erfindungsgemäße kombinierte antioxidative und basische Einwirkung möglich, den Abbau der Cellulose und des NMMO noch besser zu inhibieren, als dies mit der jeweiligen Einzeleinwirkung der Fall ist, und darüberhinaus kann ein unkontrollierbares Durchgehen von Zersetzungsprozessen verhindert werden.

Als Basen können z.B. Alkali- aber auch Erdalkalisalze, insbesondere die Carbonate, und die Hydroxide eingesetzt werden. Phosphate sind allerdings nicht gut geeignet, und Phosphonsäuren, die in der Literatur als Stabilisator vorgeschlagen werden, sind aufgrund ihres sauren Charakters zur Lösung der Aufgabe der vorliegenden Erfindung gänzlich ungeeignet. Amine und Mischungen der erstgenannten Verbindungen mit Aminen eignen sich gut. Bevorzugt verwendete Basen sind Alkalihydroxide, insbesondere Natriumhydroxid, und/oder Amine.

Besonders bewährt hat sich eine Form- bzw. Spinnmasse, die als antioxidativ wirkende Substanz Gallussäurepropylester und als basisch wirkende Substanz Natriumhydroxid enthält.

In der erfindungsgemäßen Form- bzw. Spinnmasse ist das Antioxidans zweckmäßigerweise in einer Konzentration von mindestens 100 ppm, bezogen auf Cellulose, vorhanden.

Es hat sich als zweckmäßig erwiesen, wenn die antioxidativ wirkende Substanz teilweise oder gänzlich Hydroxylamin oder Hydrazin bzw. ein entsprechendes Produkt oder Derivat dieser Verbindungen oder eine substituierte Verbindung oder deren Salz ist. Es hat sich gezeigt, daß sich das Hydroxylamin erfindungsgemäß sehr gut in Kombination mit einem anderen Antioxidans und einer basisch wirkenden Substanz zur Lösung derjenigen Aufgabe, die der vorliegenden Erfindung zugrundeliegt, eignet.

Als bevorzugt verwendetes tertiäres Amin wird NMMO verwendet.

Die Erfindung betrifft auch ein Verfahren zur Herstellung der erfindungsgemäßen Form- bzw. Spinnmasse, bei welchem Verfahren Cellulose in wässerigem NMMO suspendiert und die erhaltene Cellulosesuspension unter Anwendung von Wärme und Unterdruck in die Form- bzw. Spinnmasse übergeführt wird, welches Verfahren dadurch gekennzeichnet ist, daß
(x) ein wässeriges tertiäres Aminoxid eingesetzt wird, welchem eine Base zugegeben wurde, und daß
(y) eine Cellulosesupension eingesetzt wird, die einen antioxidativ wirkenden Stabilisator enthält.

Die Erfindung betrifft weiters ein Verfahren zur kontinuierlichen Herstellung cellulosischer Formkörper, bei welchem Verfahren folgende Schritte vorgenommen werden:
(a) Cellulose wird in ein wässeriges tertiäres Aminoxid eingemischt, wobei eine Cellulosesuspension erhalten wird,
(b) aus der Cellulosesupension wird unter Anwendung von Wärme und Unterdruck eine Celluloselösung gebildet,
(c) die Celluloselösung wird geformt und in ein wässeriges Fällbad geführt, wobei ein cellulosischer Formkörper und ein gebrauchtes Fällbad gebildet werden,
(d) das gebrauchte Fällbad wird gereinigt, und
(e) das gereinigte Fällbad wird eingeengt, um ein zweites wässeriges tertiäres Aminoxid zu gewinnen, das erneut im Schritt (a) eingesetzt wird,
dadurch gekennzeichnet, daß nach dem Schritt (c) und vor dem Schritt (b) ein oder mehrere Stabilisatoren in das Verfahren eingebracht werden, die insgesamt antioxidativ auf die Cellulose und ausreichend basisch wirken, sodaß die thermische Stabilität der Form- bzw. Spinnmasse erhöht wird.

Ein Verfahren zur Herstellung cellulosischer Formkörper mit Rückgewinnung des NMMO ist aus der WO 93/11287 bekannt. Die Reinigung des gebrauchten Fällbades wird mittels eines stark basischen Ionenaustauschers durchgeführt.

Eine bevorzugte Ausführungsform des erfindungsgemäßen Verfahrens besteht darin, daß der antioxidativ wirkende Stabilisator unmittelbar vor oder während des Schrittes (a) in das erfndungsgemäße Verfahren eingebracht wird.

Eine weitere bevorzugte Variante des erfindungsgemäßen Verfahrens ist dadurch gekennzeichnet, daß der basisch wirkende Stabilisator nach dem Schritt (c) und vor dem Schritt (a) in das Verfahren eingebracht wird.

Als Antioxidans und als Base werden am besten jene Verbindungen eingesetzt, die oben bereits detailliert angeführt sind.

Als bevorzugtes tertiäres Aminoxid wird im erfindungsgemäßen Verfahren N-Methylmorpholin-N-oxid eingesetzt.

Eine besonders bevorzugte Ausgestaltung des erfindungsgemäßen Verfahrens verwendet zur Bereitung der Celluloselösung aus der Cellulosesuspension einen Filmtruder.

Mit den nachfolgenden Versuchen wird die Erfindung noch näher beschrieben. Die Untersuchungen zur thermischen Instabilität wurden gemäß Buijtenhuijs et al. (The Degradation and Stabilization of Cellulose Dissolved in N-Methylmorpholin-N-Oxide (NMM), in "Das Papier", 40. Jahrgang, Heft 12, Seiten 615-619, 1986) mittels der DSC-(differential scanning calorimetry)-Technik (Gerät: Mettler Druck DSC Thermosystem 4000) durchgeführt.

### A) Einfluß von Säuren und/oder Metallionen auf die Spinnmasse

Der ungünstige Einfluß von Säuren und/oder Metallen bzw. Metallionen auf die thermische Stabilität von Spinnmassen kann der nachfolgenden Tabelle I entnommen werden. Die in den Versuchen verwendete Spinnmasse enthielt 76,5 Masse-% NMMO, 12 Masse-% Cellulose und 11,5 Masse-% H₂O. Sie wurde gemäß der EP-A - 0 356 419 hergestellt. Die thermischen Analysen wurden jeweils im Temperaturbereich von 40-280°C bei einer Aufheizgeschwindigkeit von 10°C/min vorgenommen (unter Stickstoff, bei 20 bar Gegendruck). "Onset", "Maximum" und "Endset" bestimmen jene Temperaturen, bei denen eine Exothermie (= das oben erwähnte Durchgehen von Zersetzungsreaktionen) begann, ihr Maximum erreichte bzw. zu Ende war. Je tiefer diese Temperaturen liegen, desto thermisch instabiler ist die Probe.

**Tabelle I**

| Versuch Nr. | Zusatz | Onset | Maximum | Endset |
|---|---|---|---|---|
| 1 | ------- | 204,3 | 228,3 | 236,0 |
| 2 | Fe₂O₃ | 191,5 | 204,5 | 211,1 |
| 3 | Spinnm.+HCOOH | 145,4 | 174,8 | 191,1 |
| 4 | Spinnm.+Fe₂O₃+HCOOH | 90,8 | 116,4 | 142,9 |
| 5 | Spinnm.+Späne+HCOOH | 98,0 | 132,6 | 153,7 |

Im Versuch 1 wurde die Spinnmasse zunächst ohne Zusätze erhitzt. Das erste Auftreten der Exothermie wurde bei 204°C beobachtet. Bei Zusatz von Fe₂O₃ (Spinnmasse:Fe₂O₃ = 1:1) wird die Exothermie um mehr als 10°C früher ausgelöst. Bei Zusatz von HCOOH (Spinnmasse:HCOOH = 3,1:1,5) sinkt die Onset-Temperatur um fast 60°C. Die zusätzliche Anwesenheit von Fe₂O₃ (Spinnmasse:Fe₂O₃:HCOOH = 2,3:0,8:2,1) in der Spinnmasse senkt die Onset-Temperatur sogar noch um weitere 50°C. Das gefürchtete Durchgehen von Zersetzungsreaktionen tritt in diesem Fall somit bei einer Temperatur von ca. 90°C auf, also einer Temperatur, die bereits tiefer liegt als die übliche Verarbeitungstemperatur der Spinnmasse (110-115°C). Einen ähnlich ungünstigen Einfluß üben Edelstahlspäne in Kombination mit HCOOH aus. Die Edelstahlspäne waren aus jenem Material, das herkömmlicherweise für Rohrleitungen zum Transport der Spinnmasse verwendet wird.

Dieses Ergebnis läßt auf eine ausgeprägte Zunahme der thermischen Instabilität der Spinnmasse in Gegenwart von Carbonsäuren und Eisenoxid bzw. Eisenionen schließen, wobei das gleichzeitige Zusammentreffen der beiden Substanzen die Zersetzungstemperatur in einem derartigen Ausmaß senkt, daß ein gefahrloses Verarbeiten der Spinnmasse nicht mehr möglich ist.

Die Versuche 1-5 sind als Prinzipversuche anzusehen, wobei der Zusatz von HCOOH die Anwesenheit von Carbonsäuren simulieren soll, die sich in der Spinnmasse aufgrund von Abbaureaktionen der Cellulose und des NMMO bilden. Die Versuche sind auch mit anderen sauren Zersetzungsprodukten, wie sie im System NMMO-Cellulose entstehen, nachvollziehbar.

Der Zusatz von Fe₂O₃ (pulverförmig; Hersteller: Aldrich) bzw. von Edelstahlspänen soll ein lokales Auftreten von Eisen z.B. an Kontaktflächen der Spinnmasse an stählernen Anlagenteilen simulieren. Die Abgabe von Eisen und anderen Metallen ist trotz Verwendung von rostfreiem Stahl als Anlagenteil nie auszuschließen.

Die in den Versuchen 1-5 gewählten Gewichtsverhältnisse zwischen den Zusätzen Fe₂O₃/HCOOH und der Spinnmasse erscheinen auf den ersten Blick zwar hoch, es ist aber aufgrund der hohen Viskosität der Spinnmasse davon auszugehen, daß eine Durchmischung z.B. während eines Transportes der erhitzten Spinnmasse durch ein Stahlrohr nicht stattfindet und sich an einigen Kontaktflächen z.B. in einem mikroskopischen Bereich die obigen Verhältnisse durchaus einstellen können. In diesem Fall treten in diesem kleinen Bereich exotherme Reaktionen auf. Die dabei entstehende Reaktionswärme kann aufgrund der Zähigkeit der Spinnmasse und ihrer schlechten Wärmeleitfähigkeit nicht abgeleitet werden und führt zu einer lokalen Überhitzung, die in den umliegenden Bereichen nun ebenfalls exotherme Reaktionen auslöst. Es wird angenommen, daß auf diese Weise nach Art einer Kettenreaktion die oben beschriebenen Verpuffungen und Explosionen ausgelöst werden.

Die Tabelle I dokumentiert, daß die als Abbauprodukte gebildeten Säuren, welche auch im realen Prozeßverlauf bei unausgereifter Prozeßführung z.B. durch Akkumulierungseffekte angereichert werden können, die Spinnmasse auf Metalle in hohem Maße sensibilisiert. Dies ist eine Erkenntnis, auf der die vorliegende Erfindung basiert und aus der abgeleitet wird, daß in der Spinnmasse neben einem Antioxidans eine ausreichende Menge einer basisch wirkenden Substanz vorhanden sein muß, um ein gefahrloses Verarbeiten der Spinnmasse zu gewährleisten. Wie groß diese Menge sein muß hängt von der Natur der eingesetzten Base, dem Säuregehalt des verwendeten NMMO und von der Verarbeitungszeit der erhitzten Spinnmasse bis zur Fällung ab. Wie unten ausführlich beschrieben, ist es dem Fachmann jedoch auf einfache Weise möglich, die optimale Basenmenge zum Neutralisieren der vorhandenen Säuren durch Titration zu ermitteln. Zusätzlich ist noch die Zugabe einer Basenreserve vorteilhaft. Die Wirksamkeit der Basenzugabe kann in weiterer Folge vom Fachmann mittels der nachfolgend beschriebenen DSC-Versuche abgesichert werden.

### B1) Einfluß von GPE auf ein Lösungssubstitut für Spinnmassen

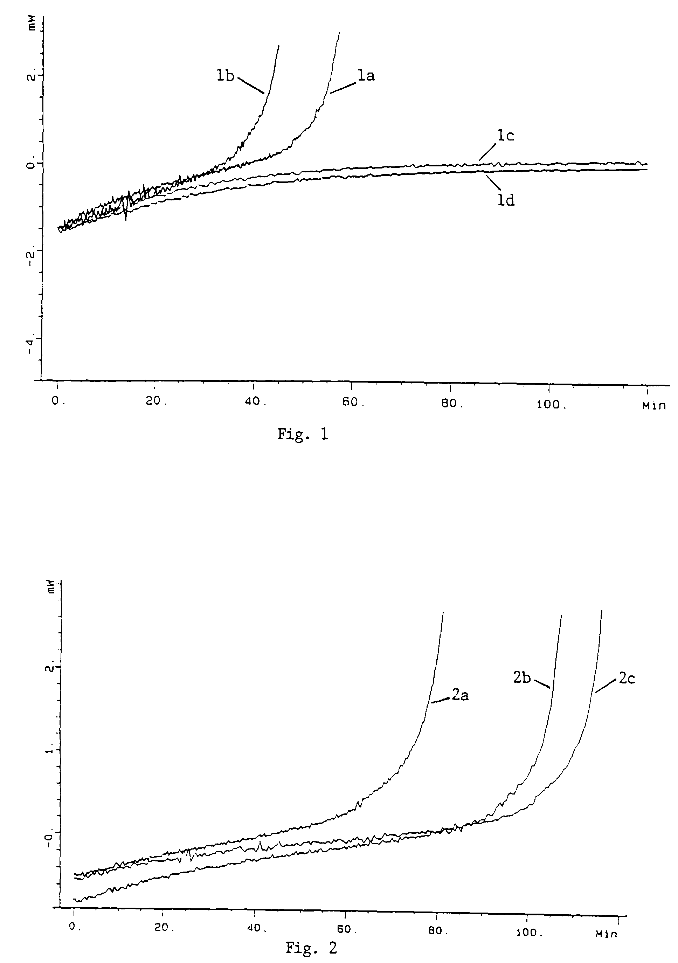

Wie oben bereits erwähnt, tragen jene Substanzen, deren Zusatz im Stand der Technik vorgeschlagen wird, um den Abbau der Cellulose zu verhindern, zur thermischen Instabilität der Spinnmasse bei. Fig. 1 ist die destabilisierende Wirkung von GPE auf die NMMO-Cellulose-Lösung besonders in Gegenwart von Metallen an einem Modellsystem zu entnehmen.

Fig. 1 zeigt vier DSC-Aufnahmen (Kurven 1a, 1b, 1c und 1d), die isotherm bei 112°C (Auftragung der Zeit in Minuten gegen den Wärmestrom in Milliwatt) an einem Lösungssubstitut für die Spinnmasse erhalten wurden. Als Lösungssubstitut diente ein Gemisch aus 62,9% NMMO, 27% Wasser, 10% β-Methylglycosid und 0,1% Glucose (zur Simulierung von Endgruppen der Cellulose), welches Gemisch zur Initiierung der Zersetzungsreaktionen zusätzlich mit einem homogenen Gemisch aus Fe₂O₃ und metallischem Kupfer, also den bekannten Hauptproblemstoffen, im Verhältnis 9:1 versetzt war. Das Gesamtverhältnis der beiden Gemische zueinander betrug ca. 2:1.

Um den Einfluß von GPE unter gleichen Rahmenbedingungen zu testen, wurde das Gemisch ohne GPE (Kurve la), mit Zusatz von 0,5 Gew.-% GPE (Kurve 1b), mit Zusatz von 0,5% NaOH (Kurve 1c) und mit der erfindungsgemäßen Kombination von GPE (0,5%) und NaOH (0,5%) gefahren. Der Fig. 1 ist zu entnehmen, daß im Gemisch ohne GPE-Zusatz nach ca. 55 Minuten die Zersetzungsreaktionen durchgehen. Bei Anwesenheit von GPE verkürzt sich diese Zeit auf ca. 40 Minuten, woraus hervorgeht, daß GPE die thermische Instabilität erhöht. Die Stabilisierung der Cellulose gegen Abbau wird offenbar besonders in Gegenwart von Metallen mit einer bedingten Abnahme der Sicherheit der Spinnmasse erkauft.

Kurve 1c zeigt, daß ein NaOH-Zusatz von 0,5% die thermische Instabilität praktisch beseitigt, da die Mischung selbst noch nach 120minütigem Erhitzen keine Exothermie zeigt. Es ist allerdings davon auszugehen, daß in dieser Mischung aufgrund des Fehlens von GPE und der Anwesenheit der NaOH das Polymersubstitut einem erheblichen Abbau unterliegt (siehe weiter unten).

Die Kurve 1d entspricht dem Verhalten der erfindungsgemäßen Spinnmasse: hier wird die Verhinderung des Celluloseabbaues nicht mit erhöhter Instabilität der Masse erkauft; die Stabilität ist sogar weit höher als jene ohne GPE-Zusatz.

### B2) Einfluß von GPE auf Spinnmassen (Laborspinnmassen)

### Versuch 6

In einem Becherglas wurden 21,6 g 83%iges NMMO-Monohydrat eingewogen und mit Mikrowellenenergie aufgeschmolzen. Das aufgeschmolzene Monohydrat wurde in ein thermostatisiertes Gefäß übergeführt. Unmittelbar darauf wurden 2,2 g Zellstoff (Buchenkunstfaserzellstoff mit einem Polymerisationsgrad von ca. 630 und einer Restfeuchte von 8%) zugegeben und die erhaltene Spinnmasse mit einem Metallstab über 20 min intensiv verrührt.

Zur Bestimmung des Polymerisationsgrades (DP) der Cellulose wurden 2 g der obigen Spinnmasse mit einer Spatel als Film in ein Becherglas eingestrichen und mit 150 ml Wasser versetzt. Innerhalb der darauffolgenden Stunde wurde die wässerige Phase einmal unter Verwerfen der ersten Waschphase erneuert, wobei eine zunehmende Verfestigung und Ausbleichung der Spinnmasse beobachtet werden konnte. Nach weiterem Stehenlassen bei Raumtemperatur wurde die feste Probe gemäß der CUEN-Methode (K. Götze, "Chemiefasern nach dem Viskoseverfahren", 2. Band, 3. Auflgae, Seite 1003) einer DP-Bestimmung unterzogen.

Die DP-Ergebnisse sind unten in der Tabelle II angegeben.

### Versuch 7

Es wurde der Versuch 6 wiederholt, mit dem Unterschied, daß nach dem Aufschmelzen des NMMO 0,2 Gew.-% (bezogen auf die Lösungsmenge) GPE zugegeben wurden. Das Ergebnis hinsichtlich DP ist der nachfolgenden Tabelle II zu entnehmen.

Zur Bestimmung der thermischen Instabilität wurden 5,5 mg der obigen Laborspinnmasse eingewogen und im Verhältnis 2:1 oberflächlich mit einem Gemisch bestehend aus 9 Teilen Fe₂O₃ und 1 Teil Cu-Pulver versetzt. Die so erhaltene Probe wurde unter Stickstoff bei 20 bar Gegendruck dynamisch mit 10°C/min auf 112°C erhitzt und bei dieser Temperatur isotherm gefahren. Das Ergebnis ist in der Fig. 2 (Kurve 2a) ersichtlich.

### Versuch 8

Es wurde der Versuch 6 wiederholt, mit dem Unterschied, daß nach dem Aufschmelzen des NMMO 0,11 Gew.-% (bezogen auf die Lösungsmenge) NaOH zugegeben wurden. Die Ergebnisse hinsichtlich DP sind in der nachfolgenden Tabelle II ersichtlich.

### Versuch 9

Es wurde der Versuch 6 wiederholt, mit dem Unterschied, daß nach dem Aufschmelzen des NMMO 0,85 Gew.-% (bezogen auf die Lösungsmenge) TBAH (Tetrabutylammoniumhydroxid) zugegeben wurden. Die Ergebnisse hinsichtlich DP sind in der nachfolgenden Tabelle II ersichtlich.

### Versuche 10 und 11

Es wurde der Versuch 7 wiederholt, mit dem Unterschied, daß unmittelbar nach dem Aufschmelzen des NMMO und vor der Zugabe von 0,2 Gew.-% GPE 0,11 Gew.-% NaOH (analog Versuch 8) bzw. 0,85% Tetrabutylammoniumhydroxid (analog Versuch 9) zugegeben wurden. Die DP-Ergebnisse sind ebenfalls in der nachfolgenden Tabelle II angegeben. Gemäß Versuch 7 wurde zusätzlich auf thermische Instabilität geprüft. Die Ergebnisse sind in der Fig. 2 (Kurven 2b bzw. 2c) ersichtlich.

**Tabelle II**

| Versuch | Zusatz | DP der Cellulose |
|---|---|---|
| 6 | - | 430 |
| 7 | GPE | 600 |
| 8 | NaOH | 460 |
| 9 | TBAH | 450 |
| 10 | GPE+NaOH | 590 |
| 11 | GPE+TBAH | 600 |

Tabelle II ist zu entnehmen, daß ein alleiniger NaOH-Zusatz (also ohne GPE) die Cellulose abbaut, aber eine Kombination von Antioxidans (GPE) und Base (NaOH) genausogut wie GPE allein dem Celluloseabbau entgegenwirkt. Fig. 2 zeigt, daß die erfindungsgemäße Spinnmasse (Kurven 2b und 2c) selbst bei einem geringen Basengehalt von 0,11 Gew.-% NaOH eine höhere thermische Stabilität aufweist als die lediglich mit GPE stabilisierte Laborspinnmasse (Kurve 2a). Der Vollständigkeit halber wird erwähnt, daß Spinnmassen, die im Labor hergestellt wurden, eine etwas höhere thermische Stabilität aufweisen als Spinnmassen, die im tatsächlichen Prozeß (Prozeßspinnmassen) auftreten.

Aus der Zusammenschau von Tabelle II und Fig. 2 ergeben sich die vorteilhaften Eigenschaften der erfindungsgemäßen Spinnmasse: höhere thermische Stabilität bei gleichzeitig hohem Polymerisationsgrad der Cellulose.

### B3) Einfluß von Hydroxylamin auf Spinnmassen

Es wurden nach dem im nachfolgenden Abschnitt C angegebenen Verfahren mehrere Kneterspinnmassen hergestellt, wobei jedoch als Antioxidans Hydroxylamin und eine Kombination von Hydroxylamin und GPE eingesetzt wurden. Der Polymerisationsgrad der gelösten Cellulose wurde nach obigem, bei Versuch 6 angegebenen Verfahren bestimmt. Die DSC-Aufnahmen zur Bestimmung der thermischen Instabilität der Kneterspinnmassen wurden analog Versuch 7 durchgeführt. Die Ergebnisse sind in der nachfolgenden Tabelle III angegeben:

**Tabelle III**

| Versuch | Stabilisator | DP | Exothermiebeginn |
|---|---|---|---|
| 12 | 0,2% NaOH | 600 | 53 |
| 13 | 0,5% NaOH | 610 | 58 |
| 14 | 0,5% NaOH + 0,1% NH₂OH | 690 | 67 |
| 15 | 0,025% GPE | 580 | 32 |
| 16 | 0,5% NaOH + 0,025 GPE + 0,1% NH₂OH | 680 | 63 |

Das Hydroxylamin wurde in allen Beispielen als Hydrochlorid eingesetzt. Der Exothermiebeginn gibt jene Zeit in Minuten an, nach der die Probe, auf 112°C erhitzt, ein erstes Anzeichen von exothermen Reaktionen zeigt. Je früher exotherme Reaktionen beginnen, desto instabiler ist die Probe.

Der Tabelle III kann entnommen werden, daß Hydroxylamin in Kombination mit der Base sowohl dem Abbau der Cellulose entgegenwirkt, als auch die thermische Stabilität der Spinnmasse erheblich erhöht.

### C) Einfluß der Kombination Antioxidans/Base auf die Cellulose

Es wurden 3 Kneterspinnmassen X, Y und Z nach folgendem Verfahren hergestellt (die Gewichtsangaben beziehen sich auf 200 g Spinnmasse):

In ein 250ml Becherglas wurden die unten genannte Base und/oder Antioxidans eingewogen. Danach wurden 221 g einer 70%igen NMMO-Lösung dazugegeben, 5 Minuten lang bei Raumtemperatur gerührt, und anschließend wurde die Lösung in einen Kneter gegeben.

Das Becherglas wurde mit 25,5 g faserig gemahlenem, luftgetrockneten Zellstoff (ca. 94%) ausgetrocknet, und danach wurde der Zellstoff ebenfalls in den Kneter gegeben.

Das Gemenge wurde 15 Minuten bei Raumtemperatur und 250 mbar suspendiert und anschließend aufgeheizt (Thermostateinstellung: 130°C). Bei ca. 90°C destillierte der erste Tropfen Wasser ab, was den eigentlichen Lösungsbeginn anzeigt. 5 Minuten später wurde der Unterdruck in entsprechenden Zeitintervallen um jeweils um 25 mbar bis auf 50 mbar vergrößert. Das Ende des Lösungsvorganges war nach ca. 1 Stunde erreicht.

Nach diesem allgemeinen Verfahren wurde die Spinnmasse X mit 0,1% NaOH, die Spinnmasse Y mit 0,025% GPE und die Spinnmasse Z mit 0,1% NaOH und 0,25% GPE hergestellt.

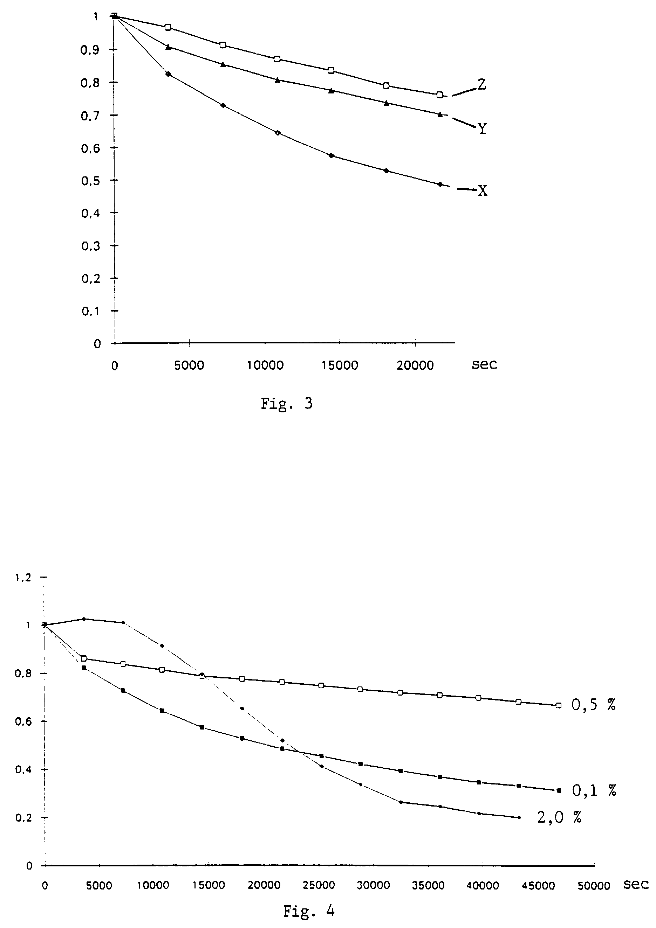

Die 3 Spinnmassen wurden jeweils auf 120°C erhitzt, und über einen Zeitraum von 6 Stunden wurden die relativen Viskositätsabnahmen beobachtet. Die Abnahme der Viskosität entspricht dem Abbau der Cellulose, sodaß auf diese Weise die Güte der Cellulose-Stabilisierung dokumentiert werden kann. Die Ergebnisse sind in der Figur 3 gezeigt.

Figur 3 kann entnommen werden, daß der kombinierte Einsatz von NaOH und GPE (Kurve Z) die Cellulose besser stabilisiert als der alleinige Einsatz des bekannten Cellulose-Stabilisators GPE (Kurve Y). NaOH erweist sich als schlechter Cellulose-Stabilisator, falls er als alleiniger Zusatz eingesetzt wird.

### D) Einfluß der Base auf die Cellulose

Wie oben bereits erwähnt haben die Erfinder festgestellt, daß eine ausschließliche Basenstabilisierung stark konzentrationsabhängig und damit in der Praxis sehr heikel ist. Es konnte festgestellt werden, daß einerseits niedrige Basenkonzentrationen praktisch kaum eine wirksame Stabilisierung gegen Abbauprozesse bieten, daß aber andererseits hohe Basenkonzentrationen wiederum bedenklich sind, da insbesondere bei längerer thermischer Belastung ein zwar zeitlich verzögerter, aber dann umso rascher anlaufender Zerfall und ein Abbau der Cellulose ausgelöst werden. Dies ist Fig. 4 zu entnehmen.

Fig. 4 zeigt die zeitliche Abnahme der relativen Viskosität von 3 Spinnmassen, die lediglich mit NaOH in 3 verschiedenen Konzentrationen (0,1%; 0,5% und 2,0%) stabilisiert wurden. Bei hoher Konzentrationen an NaOH (2,0%) steigt die Viskosität zwar kurzfristig an, nimmt jedoch dann rasch ab. Konzentrationen unter 0,5% sind günstig, da sie die Cellulose bei längerer Einwirkung weniger angreifen.

### E) Ausreichender Basengehalt in der Cellulose-NMMO-Lösung (Prozeßspinnmasse)

Wie oben erwähnt, ist es zur Hintanhaltung der explosionshaften Zersetzung der erhitzten Prozeßspinnmasse von entscheidender Bedeutung, daß in der Spinnmasse eine ausreichende Basenmenge vorgesehen ist. Ob eine ausreichende Basenmenge vorhanden ist, kann mittels eines Mikroversuchs festgestellt werden, der nachfolgend detailliert beschrieben wird.

Eine im Sinne der vorliegenden Erfindung ausreichende Basenmenge ist dann vorhanden, wenn bei der betreffenden Spinnmassenprobe
1. der Zeit-Mittelwert der Initialisierungspunkte von mindestens 3 unabhängig durchgeführten DSC-Mikroversuchen mindestens 60 Minuten ist und wenn
2. der Zeit-Mittelwert zum Erreichen des 3 mW-Kriteriums ("time iso") von mindestens 3 unabhängig durchgeführten DSC-Mikroversuchen mindestens 80 Minuten ist,
wobei die DSC-Versuche unter Verwendung eines Druck-DSC der Fa. Mettler (Thermosystems 4000) mit der nachfolgenden Konfiguration unter den nachfolgend beschriebenen Versuchsbedingungen durchgeführt werden.

Konfiguration des Druck-DSC:
Für Steuerung und Auswertung: TA-Processor TC11; Auswertungssoftware: TA72AT.2; Messung: Druck DDK Meßzelle DSC27HP; eingesetzter Drucker: Epson FX 850.

### Versuchsbedingungen:

Die zu untersuchende Spinnmasse (5,5 mg ± 0,4 mg) wird im festen, ausgekühlten Zustand in einen mehrfach gelochten Alu-Tiegel (offenes System) eingewogen und in der Folge oberflächlich mit einem "Explosionsinitiator", d.h. einem homogenen Gemisch aus 9 Gewichtsteilen Fe₂O₃ (Hersteller Aldrich, Art.Nr. 3924) und 1 Gewichtsteil metallischem Kupfer (Hersteller Merck, Art.Nr. 2715), im Verhältnis 2:1 (2 Teile Spinnmasse : 1 Teil Gemisch) in innigen Kontakt gebracht.

Zur Vornahme der eigentlichen DSC-Messung wird die Meßkammer nach Einbringen des Alu-Tiegels mit einem Druck von 20 bar Stickstoff beaufschlagt. Danach wird mit einer Geschwindigkeit von 10°C/min auf eine Temperatur von 112°C (Startpunkt 40°C) aufgeheizt. Im Anschluß daran wird die Probe über einen Zeitraum von maximal 120 min auf 112°C gehalten und während dieser Zeit die DSC-Kurve aufgenommen.

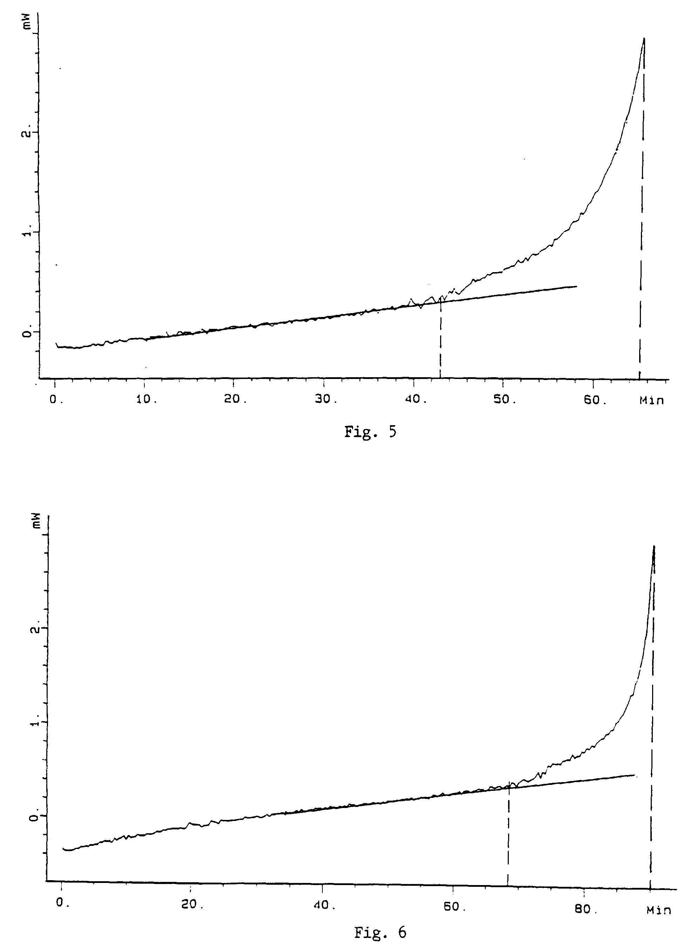

Aufheizen auf 112°C und Halten bei dieser Temperatur werden im Prozessor des DSC-Gerätes abgespeichert und von diesem stets unter gleichen Bedingungen verknüpft. Die Figuren 5 und 6 zeigen beispielhaft zwei DSC-Aufnahmen, die unten den obigen Bedingungen bei 112°C aufgezeichnet wurden, wobei sich Fig. 5 auf eine Spinnmasse des Standes der Technik (77,5% NMMO, 12% Cellulose, 10,5% Wasser) bezieht, die ausschließlich mit 2000 ppm GPE (bezogen auf Cellulose) stabilisiert war, und sich Fig. 6 auf eine erfindungsgemäße Spinnmasse (77,5% NMMO, 12% Cellulose, 10,5% Wasser) bezieht, die mit 2000 ppm GPE (bezogen auf Cellulose) und 800 ppm NaOH (bezogen auf die Lösung) stabilisiert war.

Als Ordinate sind in den beiden Fig. die Milliwatt (mW) der abgegebenen energetischen Leistung und als Abszisse die Zeit aufgetragen. Als Initialisierungspunkt wird nun in der Kurve jener Zeitwert bestimmt, der ein erstes Ansteigen in den exothermen Bereich anzeigt. Dieses erste Ansteigen wird am besten dadurch ermittelt, daß eine Tangente an den unteren Teil der Kurve gelegt wird. Der Initialisierungspunkt ist für die bekannte Spinnmasse (Fig. 5) mit 43 min zu entnehmen und für die erfindungsgemäße Spinnmasse (Fig. 6) mit 68 min. Der Zeitwert zum Erreichen des 3 mW Kriteriums ("time iso") beträgt für die bekannte Spinnmasse 65 min und für die erfindungsgemäße 90 min.

Um festzustellen, ob in der Spinnmasse eine ausreichende Basizität vorhanden ist, müssen, wie oben erwähnt, jeder Versuch dreimal durchgeführt und die arithmetischen Mittelwerte gebildet werden. Liegen sowohl der erste Mittelwert bei 60 min (oder darüber) als auch der zweite Mittelwert bei 80 min (oder darüber), so ist in der Spinnmasse eine ausreichende Basizität vorhanden.

### F) Einstellung eines vorteilhaften Basengehaltes in der Cellulose-NMMO-Lösung

Es hat sich gezeigt, daß ein ausreichender Basengehalt auf jeden Fall dann vorliegt, wenn zur Bereitung der erfindungsgemäßen Spinnmasse eine wässerige NMMO-Lösung verwendet wird, in der praktisch keine freien Carbonsäuren vorhanden sind. Um die zur Neutralisation der COOH-Gruppen ausreichende Basenmenge einstellen zu können, ist es zweckmäßig, zunächst den Gehalt an freien Carbonsäuren im wässerigen NMMO zu bestimmen.

Mit der Bezeichnung "freie Carbonsäuren" sind jegliche Verbindungen gemeint, die eine COOH-Gruppe tragen, die nicht zum entsprechenden Carboxylat neutralisiert ist. Diese Verbindungen sind sowohl in jenem NMMO enthalten, das im Handel erhältlich ist, als auch in derjenigen wässerigen NMMO-Lösung, die aus dem Fällbad recycliert und zur neuerlichen Bereitung von Spinnmasse verwendet wird. Die Carbonsäuren bewirken eine Absenkung des pH im NMMO: während z.B. eine Lösung von reinem NMMO in Wasser einen pH von über 10,5 besitzt, weisen Spinnbäder pH-Werte auf, die wesentlich niedriger sind und z.B. zwischen 6,5 und 7,5 liegen können. Diese pH-Absenkung ist neben einem Verdünnungseffekt auch den bei den verschiedensten Abbauprozessen bzw. chemischen Reaktionen gebildeten freien Carbonsäuren zuzuschreiben.

Es hat sich nun gezeigt, daß die wässerige NNMO-Lösung mit starken Basen in herkömmlicher Weise titrierbar ist und daß die Titrationskurve bei konstanter Zugabe der Base etwa im Bereich zwischen pH 7 und pH 11 den für Titrationskurven charakteristischen steilen Verlauf zeigt, der durch die sprunghafte Zunahme des pH-Wertes der Titrationslösung bedingt ist. Es wird angenommen, daß die in der Lösung vorhandenen freien Carbonsäuren für diesen Verlauf der Titrationskurve verantwortlich sind. Der Äquivalenzpunkt der Kurve liegt etwa im Bereich von pH 8,5 und 9,5, wobei der im Einzelfall bestimmte Wert naturgemäß von der Qualität des verwendeten NMMO abhängen wird.

Der Gehalt an freien Carbonsäuren in der wässerigen NMMO-Lösung kann somit titrimetrisch bestimmt werden, indem eine abgewogene Menge der wässerigen NMMO-Lösung, deren NMMO-Gehalt naturgemäß bekannt ist oder gegebenenfalls mittels herkömmlicher analytischer Verfahren bestimmt werden muß, mit Wasser verdünnt, anschließend mit NaOH titriert und jene Basenmenge errechnet wird, die der wässerigen NMMO-Lösung zugegeben werden muß, um die freien Carbonsäuren zu neutralisieren. Wird eine derartige NMMO-Lösung zur Bereitung der Spinnmasse verwendet, so ist sichergestellt, daß im Sinne der vorliegenden Erfindung eine ausreichende Basizität in der Spinnmasse vorhanden ist.

Vorteilhafterweise wird zusätzlich zu dieser aus der Titration errechneten Basenmenge noch eine zweite Basenmenge als Basenüberschuß der NMMO-Lösung zugegeben, um eine Basenreserve in der Spinnmasse vorzusehen, die Säuren neutralisieren soll, die sich während des NMMO-Prozesses, also während der Herstellung und Verarbeitung der Spinnmasse, in dieser bilden. Eine derartige Basenreserve erhöht die Sicherheit zusätzlich. Diese zweite Basenmenge beträgt im Fall von starken Basen (Alkalihydroxiden) zweckmäßigerweise zwischen 0,001% (10 ppm) und 0,5% (5000 ppm) der Masse der zur Herstellung der Spinnmasse eingesetzten NMMO-Lösung. Bei schwachen Basen, wie z.B. Aminen, können Maximalmengen bis zu 5% zweckmäßig sein. Es liegt auf der Hand, daß der Fachmann die im Einzelfall verwendete Überschußmenge mit der Menge der sich, abhängig von den jeweiligen Prozeßcharakteristiken, bildenden Säuren abstimmen wird. Es hat sich allerdings gezeigt, daß bei Alkalihydroxiden die obere Grenze von 0,5% im Hinblick auf die Hintanhaltung des Celluloseabbaues nicht überschritten werden sollte.

Es ist für die vorliegende Erfindung nicht wesentlich, an welchem Punkt des NMMO-Kreislaufes die Base eingebracht bzw. die Carbonsäuren neutralisiert werden. So kann die Base z.B. der gebrauchten Spinnbadflüssigkeit vor, während oder nach ihrer Reinigung bzw. vor, während oder nach ihrer Konzentrierung zugegeben werden. Weiters ist denkbar, die Base erst bei der Bereitung der Cellulosesuspension zuzugeben, also die Cellulose zusammen mit der nötigen Basenmenge in die gereinigte, recyclierte NMMO-Lösung, die noch freie Carbonsäuren enthält, einzumischen. Wesentlich ist nur, daß in der Spinnmasse die ausreichende Basizität vorhanden ist.

## Patentansprüche

1. Form- bzw. Spinnmasse enthaltend Cellulose, ein wässeriges tertiäres Aminoxid, ein Nichtlösungsmittel und einen Stabilisator, dadurch gekennzeichnet, daß ein oder mehrere Stabilisatoren vorgesehen sind, die insgesamt antioxidativ auf die Cellulose und ausreichend basisch wirken, sodaß die thermische Stabilität der Form- bzw. Spinnmasse erhöht wird, mit der Maßgabe, daß als basisch wirkender Stabilisator kein Phosphat vorgesehen ist.

2. Form- bzw. Spinnmasse nach Anspruch 1, dadurch gekennzeichnet, daß ein Antioxidans und OH⁻-Ionen als Stabilisatoren vorgesehen sind.

3. Form- bzw. Spinnmasse nach Anspruch 1 oder 2, dadurch gekennzeichnet, daß als Antioxidans Tannine, Phenole und/oder Glycerinaldehyd und/oder ein oder mehrere organische Verbindungen vorgesehen sind, die wenigstens vier Kohlenstoffatome und wenigstens zwei konjugierte Doppelbindungen und wenigstens zwei Hydroxyl- und/oder Aminogruppen mit wenigstens einem Wasserstoffatom besitzen.

4. Form- bzw. Spinnmasse nach Anspruch 3, dadurch gekennzeichnet, daß die organische Verbindung eine organische Polyhydroxyverbindung ist, insbesondere Brenzkatechin, Pyrogallol, Gallussäure, Gallussäuremethylester, -ethylester, -propylester oder -isopropylester.

5. Form- bzw. Spinnmasse nach Anspruch 2, dadurch gekennzeichnet, daß als basisch wirkender Stabilisator ein Alkalihydroxid und/oder ein Amin vorgesehen ist.

6. Form- und Spinnmasse nach einem oder mehreren der Ansprüche 1 bis 5, dadurch gekennzeichnet, daß als antioxidativ wirkender Stabilisator Gallussäurepropylester und als basisch wirkender Stabilisator Natriumhydroxid vorgesehen sind.

7. Form- bzw. Spinmasse nach einem oder mehreren der Ansprüche 1 bis 6, dadurch gekennzeichnet, daß das Antioxidans in einer Konzentration von mindestens 100 ppm, bezogen auf die Cellulose, enthalten ist.

8. Form- bzw. Spinnmasse nach einem oder mehreren der Ansprüche 1 bis 7, dadurch gekennzeichnet, daß der antioxidativ wirkende Stabilisator zumindest teilweise Hydroxylamin ist.

9. Form- bzw. Spinnmasse nach einem oder mehreren der Ansprüche 1 bis 8, dadurch gekennzeichnet, daß als tertiäres Aminoxid N-Methylmorpholin-N-oxid vorgesehen ist.

10. Verfahren zur Herstellung einer Form- bzw. Spinnmasse gemäß einem oder mehreren der Ansprüche 1 bis 9, bei welchem Verfahren Cellulose in einem wässerigen tertiären Aminoxid suspendiert und die erhaltene Cellulosesuspension unter Anwendung von Wärme und Unterdruck in die Form- bzw. Spinnmasse übergeführt wird, dadurch gekennzeichnet, daß
(x) ein wässeriges tertiäres Aminoxid eingesetzt wird, welchem eine Base zugesetzt wurde, und daß
(y) eine Cellulosesupension eingesetzt wird, die einen antioxidativ wirkenden Stabilisator enthält.

11. Verfahren zur kontinuierlichen Herstellung cellulosischer Formkörper, bei welchem Verfahren folgende Schritte vorgenommen werden:
(a) Cellulose wird in ein wässeriges tertiäres Aminoxid eingemischt, wobei eine Cellulosesuspension erhalten wird,
(b) aus der Cellulosesupension wird unter Anwendung von Wärme und Unterdruck eine Celluloselösung gebildet,
(c) die Celluloselösung wird geformt und in ein wässeriges Fällbad geführt, wobei ein cellulosischer Formkörper und ein gebrauchtes Fällbad gebildet werden,
(d) das gebrauchte Fällbad wird gereinigt, und
(e) das gereinigte Fällbad wird eingeengt, um ein zweites wässeriges tertiäres Aminoxid zu gewinnen, das erneut im Schritt (a) eingesetzt wird,
dadurch gekennzeichnet, daß nach dem Schritt (c) und vor dem Schritt (b) ein oder mehrere Stabilisatoren in das Verfahren eingebracht werden, die insgesamt ausreichend basisch und auf die Cellulose antioxidativ wirken, sodaß die thermische Stabilität der Celluloselösung erhöht wird.

12. Verfahren nach Anspruch 11, dadurch gekennzeichnet, daß der antioxidativ wirkende Stabilisator unmittelbar vor oder während des Schrittes (a) in das Verfahren eingebracht wird.

13. Verfahren nach Anspruch 11 oder 12, dadurch gekennzeichnet, daß der basisch wirkende Stabilisator nach dem Schritt (c) und vor dem Schritt (a) in das Verfahren eingebracht wird.

14. Verfahren nach einem oder mehreren der Ansprüche 11 bis 13, dadurch gekennzeichnet, daß als Antioxidans und als Base jene Verbindungen eingesetzt werden, die in den Ansprüchen 3, 4, 5, 6 und 8 genannt sind.

15. Verfahren nach einem oder mehreren der Ansprüche 11 bis 14, dadurch gekennzeichnet, daß als tertiäres Aminoxid N-Methylmorpholin-N-oxid eingesetzt wird.

16. Verfahren nach einem der Ansprüche 10 bis 15, dadurch gekennzeichnet, daß die Bereitung der Form- bzw. Spinnmasse bzw. der Schritt (b) in einem Filmtruder vorgenommen wird.

## Claims

1. Moulding or spinning compound containing cellulose, an aqueous tertiary amine oxide, a nonsolvent and a stabilizer, characterized in that one or more stabilizers are provided which have in total an antioxidative action on the cellulose and a sufficiently basic action for the thermal stability of the moulding or spinning compound to be increased, with the proviso that no phosphate is provided as stabilizer having basic action.

2. Moulding or spinning compound according to Claim 1, characterized in that an antioxidant and OH⁻ ions are provided as stabilizers.

3. Moulding or spinning compound according to Claim 1 or 2, characterized in that tannins, phenols and/or glyceraldehyde and/or one or more organic compounds having at least four carbon atoms and at least two conjugated double bonds and at least two hydroxyl and/or amino groups containing at least one hydrogen atom are provided as antioxidant.

4. Moulding or spinning compound according to Claim 3, characterized in that the organic compound is an organic polyhydroxyl compound, in particular pyrocatechol, pyrogallol, gallic acid, methyl, ethyl, propyl or isopropyl gallate.

5. Moulding or spinning compound according to Claim 2, characterized in that an alkali hydroxide and/or an amine is provided as stabilizer having basic action.

6. Moulding and spinning compound according to one or more of Claims 1 to 5, characterized in that propyl gallate is provided as stabilizer having antioxidative action and sodium hydroxide is provided as stabilizer having basic action.

7. Moulding or spinning compound according to one or more of Claims 1 to 6, characterized in that it contains the antioxidant in a concentration of at least 100 ppm, relative to the cellulose.

8. Moulding or spinning compound according to one or more of Claims 1 to 7, characterized in that the stabilizer having antioxidative action is at least partly hydroxylamine.

9. Moulding or spinning compound according to one or more of Claims 1 to 8, characterized in that N-methylmorpholine N-oxide is provided as tertiary amine oxide.

10. Process for preparing a moulding or spinning compound according to one or more of Claims 1 to 9, in which process cellulose is suspended in an aqueous tertiary amine oxide and the cellulose suspension obtained is converted into the moulding or spinning compound by applying heat and reduced pressure, characterized in that
(x) an aqueous tertiary amine oxide is used to which a base has been added, and in that
(y) a cellulose suspension is used which contains a stabilizer having antioxidative action.

11. Process for continuously producing cellulosic moulded bodies, in which process the following steps are carried out:
(a) cellulose is added to an aqueous tertiary amine oxide, a cellulose suspension being obtained,
(b) a cellulose solution is formed from the cellulose suspension by applying heat and reduced pressure,
(c) the cellulose solution is moulded and fed into an aqueous precipitation bath, a cellulosic moulded body and a spent precipitation bath being formed,
(d) the spent precipitation bath is purified and
(e) the purified precipitation bath is concentrated down in order to obtain a second aqueous tertiary amine oxide which can be used again in step (a),
characterized in that, after step (c) and before step (b) one or more stabilizers are introduced into the process which have in total an antioxidative action on the cellulose and a sufficiently basic action for the thermal stability of the cellulose solution to be increased.

12. Process according to Claim 11, characterized in that the stabilizer having antioxidative action is introduced into the process immediately before or during step (a).

13. Process according to Claim 11 or 12, characterized in that the stabilizer having basic action is introduced into the process after step (c) and before step (a).

14. Process according to one or more of Claims 11 to 13, characterized in that those compounds are used as antioxidant and as base which are named in Claims 3, 4, 5, 6 and 8.

15. Process according to one or more of Claims 11 to 14, characterized in that N-methylmorpholine N-oxide is used as tertiary amine oxide.

16. Process according to one of Claims 10 to 15, characterized in that the preparation of the moulding or spinning compound or the step (b) is carried out in a filmtruder.

## Revendications

1. Masse à former ou filer contenant de la cellulose, un aminoxyde tertiaire aqueux, un non-solvant et un stabilisant, caractérisée en ce qu'il est prévu un ou plusieurs stabilisants qui agissent globalement de manière antioxydante et suffisamment basique sur la cellulose pour que la stabilité thermique de la masse à former ou à filer soit augmentée, à condition qu'aucun phosphate ne soit prévu comme stabilisant à action basique.

2. Masse à former ou filer selon la revendication 1, caractérisée en ce qu'il est prévu un antioxydant et des ions OH⁻ comme stabilisants.

3. Masse à former ou filer selon la revendication 1 ou 2, caractérisée en ce qu'il est prévu comme antioxydant des tanins, des phénols et/ou du glycéral-déhyde et/ou un ou plusieurs composés organiques qui possèdent au moins 4 atomes de carbone et au moins deux doubles liaisons conjuguées et au moins deux groupes hydroxyle et/ou amino avec au moins un atome d'hydrogène.

4. Masse à former ou filer selon la revendication 3, caractérisée en ce que le composé organique est un composé organique polyhydroxylé, en particulier la pyrocatéchine, le pyrogallol, l'acide gallique, le gallate de méthyle, d'éthyle, de propyle ou d'isopropyle.

5. Masse à former ou filer selon la revendication 2, caractérisée en ce qu'il est prévu un hydroxyde alcalin et/ou une amine comme stabilisant à action basique.

6. Masse à former ou filer selon une ou plusieurs des revendications 1 à 5, caractérisée en ce qu'il est prévu du gallate de propyle comme stabilisant à action antioxydante et de l'hydroxyde de sodium comme stabilisant à action basique.

7. Masse à former ou filer selon une ou plusieurs des revendications 1 à 6, caractérisée en ce que l'antioxydant est contenu en une concentration d'au moins 100 ppm par rapport à la cellulose.

8. Masse à former ou filer selon une ou plusieurs des revendications 1 à 7, caractérisée en ce que le stabilisant à action antioxydante est au moins en partie l'hydroxylamine.

9. Masse à former ou filer selon une ou plusieurs des revendications 1 à 8, caractérisée en ce que le N-méthylmorpholine-N-oxyde est prévu comme aminoxyde tertiaire.

10. Procédé de préparation d'une masse à former ou filer selon une ou plusieurs des revendications 1 à 9, procédé dans lequel de la cellulose est mise en suspension dans un aminoxyde tertiaire aqueux et la suspension de cellulose obtenue est convertie en la masse à former ou filer au moyen de chaleur et d'une pression négative, caractérisé en ce que
(x) on utilise un aminoxyde tertiaire aqueux auquel une base a été ajoutée et en ce que
(y) on utilise une suspension de cellulose qui contient un stabilisant à action antioxydante.

11. Procédé de préparation continue de corps façonnés cellulosiques, procédé dans lequel les étapes suivantes sont mises en oeuvre :
(a) de la cellulose est incorporée dans un aminoxyde tertiaire aqueux de sorte que l'on obtient une suspension de cellulose,
(b) une solution de cellulose est formée à partir de la suspension de cellulose grâce à l'utilisation de chaleur et d'une pression négative,
(c) la solution de cellulose est mise en forme et introduite dans un bain de précipitation aqueux de sorte qu'il se forme un corps façonné cellulosique et un bain de précipitation usé,
(d) le bain de précipitation usé est épuré, et
(e) le bain de précipitation épuré est concentré pour obtenir un deuxième aminoxyde tertiaire aqueux qui est utilisé de nouveau dans l'étape (a),
caractérisé en ce que l'on introduit dans le procédé, après l'étape (c) et avant l'étape (b), un ou plusieurs stabilisants qui agissent globalement de manière suffisamment basique et antioxydante sur la cellulose pour que la stabilité thermique de la solution de cellulose soit augmentée.

12. Procédé selon la revendication 11, caractérisé en ce que le stabilisant à action antioxydante est introduit dans le procédé immédiatement avant ou pendant l'étape (a).

13. Procédé selon la revendication 11 ou 12, caractérisé en ce que le stabilisant à action basique est introduit dans le procédé après l'étape (c) et avant l'étape (a).

14. Procédé selon une ou plusieurs des revendications 11 à 13, caractérisé en ce que l'on utilise comme antioxydant et comme base les composés qui sont cités dans les revendications 3, 4, 5, 6 et 8.

15. Procédé selon une ou plusieurs des revendications 11 à 14, caractérisé en ce que l'on utilise le N-méthylmorpholine-N-oxyde comme aminoxyde tertiaire.

16. Procédé selon l'une des revendications 10 à 15, caractérisé en ce que la préparation de la masse à former ou filer ou l'étape (b) est réalisée dans une extrudeuse pour films.
